(19) Europäisches Patentamt
European Patent Office
Office européen des brevets

(11) **EP 2 440 613 B1**

(12) **EUROPEAN PATENT SPECIFICATION**

(45) Date of publication and mention
of the grant of the patent:
**24.04.2013 Bulletin 2013/17**

(51) Int Cl.:
**C08L 23/06** (2006.01)     **C08J 9/28** (2006.01)

(21) Application number: **10727280.9**

(22) Date of filing: **09.06.2010**

(86) International application number:
**PCT/US2010/037874**

(87) International publication number:
**WO 2010/144515 (16.12.2010 Gazette 2010/50)**

(54) **MICROPOROUS MATERIALS SUITABLE AS SUBSTRATES FOR PRINTED ELECTRONICS**

ALS SUBSTRATE FÜR GEDRUCKTE ELEKTRONIK GEEIGNETE MIKROPORÖSE MATERIALIEN

MATÉRIAUX MICROPOREUX POUVANT SERVIR DE SUBSTRATS POUR DES DISPOSITIFS ÉLECTRONIQUES IMPRIMÉS

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **10.06.2009  US 482115**

(43) Date of publication of application:
**18.04.2012 Bulletin 2012/16**

(73) Proprietor: **PPG Industries Ohio, Inc.**
**Cleveland, OH 44111 (US)**

(72) Inventors:
• **BOYER, James L.**
**Monroeville, Pennsylvania 15146 (US)**
• **PARRINELLO, Luciano M.**
**Allison Park, Pennsylvania 15101 (US)**
• **BENENATI, Paul L.**
**Wadsworth, Ohio 44281 (US)**
• **RAMAN, Narayan K.**
**Pittsburgh, Pennsylvania 15218 (US)**
• **CAMPBELL, Pamela L.**
**Mars, Pennsylvania 16046 (US)**
• **KOVACS, Joseph P.**
**The Woodlands, Texas 77382 (US)**

(74) Representative: **Polypatent**
**Braunsberger Feld 29**
**51429 Bergisch Gladbach (DE)**

(56) References cited:
**EP-A2- 0 289 859     US-A- 5 196 262**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to a microporous substrate designed for use in printed electronics applications, to printed electronic devices employing such devices and methods for making same.

BACKGROUND OF THE INVENTION

Printed electronics is quickly becoming an area of increasing technical progress and commercial interest. It is, as the name states, electronic components or devices produced using printing processes.

Print electronic devices currently under development include but are not limited to Organic Light Emitting Diodes (OLED's), organic photovoltaics, batteries and transistors. These devices are or will be either fully integrated, that is, produced entirely from a printing process; or hybrid designs, that is, a combination of components produced from a printing process and other more traditional methods. Some electronic devices and components presently being produced using a printing method include but are not limited to RFID antennas, photovoltaic cells, electrical connectors, or any other devices comprised of components utilizing printed circuitry. The printing inks typically are conductive and can be either organic or inorganic. End-use applications can include but are not limited to displays, smart packaging, cards (proximity, smart, RFID, financial etc.), new market creation, advertising elements or toys and novelties. Ideally, these devices are prepared by printing conductive inks on substrates having the right combination of electrical, chemical and physical properties.

SUMMARY OF THE INVENTION

The present invention is directed to a microporous material comprising: (a) a polyolefin matrix comprising ultrahigh molecular weight polyolefin having a molecular weight of greater than 7 million grams per mole, and 30 to 80 weight percent high density polyolefin; (b) finely divided particulate filler distributed throughout the matrix, said particulate filler comprising at least 10 weight percent of filler having a density ranging from 2.21 to 3.21 grams per cubic centimeter; and (c) at least 35 percent by volume of a network of interconnecting pores communicating throughout the microporous material. The microporous material has a density ranging from 0.6 to 0.9 g/cc, a Sheffield smoothness of less than or equal to 40, and an air flow rate of 1000 or more Gurley seconds.

The present invention also is directed to an electronic device comprising: (I) a substrate comprising a microporous material comprising: (a) a polyolefin matrix comprising ultrahigh molecular weight polyolefin having a molecular weight of greater than 7 million grams per mole, and 30 to 80 weight percent high density polyolefin; (b) finely divided particulate filler distributed throughout the matrix, said particulate comprising at least 10 of filler having a density ranging from 2.21 to 3.21 grams per cubic centimeter; and (c) at least 35 percent by volume of a network of interconnecting pores communicating throughout the microporous material. The microporous material has a density ranging from 0.6 to 0.9 g/cc, a Sheffield smoothness of less than or equal to 40, and an air flow rate of 1000 or more Gurley seconds; and (II) a conductive ink appended to at least a portion of a surface of the substrate (I).

The present invention further provides a method for preparing microporous sheet material comprising a polyolefin matrix having finely divided particulate filler distributed throughout the matrix, and a network of interconnecting pores communicating throughout the microporous sheet material. The method comprises: **(a)** forming a mixture comprising a polyolefin matrix composition comprising (i) ultrahigh molecular weight polyolefin having a molecular weight of greater than 7 million grams per mole, (ii) 30 to 80 weight percent high density polyolefin; (iii) finely divided particulate filler comprising at least 10 weight percent of filler having a density ranging from 2.21 to 3.21 grams per cubic centimeter, and (iv) processing plasticizer composition; **(b)** extruding the mixture to form a continuous sheet having a processing plasticizer composition content ranging from 45 to 55 weight percent based on weight of the continuous sheet; and **(c)** contacting the continuous sheet with an extraction fluid composition to extract the processing plasticizer composition from the continuous sheet to form the microporous sheet material. The microporous sheet material has a density ranging from 0.6 to 0.9 g/cc, a Sheffield smoothness of less than or equal to 40, and an air flow rate of 1000 or more Gurley seconds.

DETAILED DESCRIPTION OF THE INVENTION

As used in this specification and the appended claims, the articles "a," "an," and "the" include plural referents unless expressly and unequivocally limited to one referent.

Additionally, for the purposes of this specification, unless otherwise indicated, all numbers expressing quantities of ingredients, reaction conditions, and other properties or parameters used in the specification are to be understood as being modified in all instances by the term "about." Accordingly, unless otherwise indicated, it should be understood that the numerical parameters set forth in the following specification and attached claims are approximations. At the very least, and not as an attempt to limit the application of the doctrine of equivalents to the scope of the claims, numerical parameters should be read in light of the number of reported significant digits and the application of ordinary rounding techniques.

Further, while the numerical ranges and parameters setting forth the broad scope of the invention are approximations as discussed above, the numerical values set forth in the Examples section are reported as precisely as possible. It should be understood, however, that such numerical values inherently contain certain errors resulting from the measurement equipment and/or measurement technique.

Various non-limiting embodiments of the invention will now be described.

As previously mentioned, the present invention is directed to a microporous material comprising: (a) a polyolefin matrix comprising ultrahigh molecular weight polyolefin having a molecular weight of greater than 7 million grams per mole, and 30 to 80 weight percent high density polyolefin; (b) finely divided particulate filler distributed throughout the matrix, the particulate filler comprising at least 10 weight percent of filler having a density ranging from 2.21 to 3.21 grams per cubic centimeter; and (c) at least 35 percent by volume of a network of interconnecting pores communicating throughout the microporous material. The microporous material according to the present invention has a density ranging from 0.6 to 0.9 g/cc, a Sheffield smoothness of less than or equal to 40, and an air flow rate of 1000 or more Gurley seconds.

As previously mentioned, the microporous material of the present invention is comprised of a polyolefin matrix comprising ultrahigh molecular weight (UHMW) polyolefin having a molecular weight of greater than 7 million grams per mole, such as greater than 8 million grams per mole, or greater than 9 million grams per mole. Suitable non-limiting examples of UHMW polyolefin can include those essentially linear UHMW polyethylene or polypropylene having a molecular weight of greater than 7 million grams per mole, as are known in the art and commercially available.

The polyolefin matrix further comprises 30 to 80 weight percent high density polyolefin, such as 40 to 80 weight percent, or 50 to 80 weight percent of high density polyolefin, for example high density polypropylene and/or high density polyethylene. For purposes of the present invention, by "high density" polyolefin is meant a polyolefin (e.g., polyethylene) having a density greater 0.940 g/cm$^3$, such as from 0.941 to 0.965 g/cm$^3$. Such materials are known in the art and readily available commercially. Suitable HDPE (iii) that may be used in the polymeric matrix (a) can include but is not limited to FINA® 1288 available commercially from Total Petrochemicals (manufactured by Atofina), and MG-0240 available from Braskem.

The polyolefin matrix also can further comprise other polymeric components such as, for example, ultrahigh molecular weight (UHMW) polyolefin materials having a molecular weight of less than 7 million grams per mole, such as less than 6.5 million grams per mole, or less than 6 million grams per mole. Suitable non-limiting examples of these UHMW polyolefin can include any of the essentially linear UHMW polyethylene or polypropylene having molecular weights of less than 7 million grams per mole, as are known in the art and readily available commercially.

Generally, inasmuch as UHMW polyolefins are not thermoset polymers having an infinite molecular weight, they are technically classified as thermoplastic materials. The ultrahigh molecular weight polypropylene can comprise essentially linear ultrahigh molecular weight isotactic polypropylene. Often the degree of isotacticity of such polymer is at least 95 percent, e.g., at least 98 percent. While there is no particular restriction on the upper limit of the intrinsic viscosity of the UHMW polyethylene, in one non-limiting example, the intrinsic viscosity can range from 18 to 39 deciliters/gram, e.g., from 18 to 32 deciliters/gram. While there is no particular restriction on the upper limit of the intrinsic viscosity of the UHMW polypropylene, in one non-limiting example, the intrinsic viscosity can range from 6 to 18 deciliters/gram, e.g., from 7 to 16 deciliters/gram.

For purposes of the present invention, intrinsic viscosity is determined by extrapolating to zero concentration the reduced viscosities or the inherent viscosities of several dilute solutions of the UHMW polyolefin where the solvent is freshly distilled decahydronaphthalene to which 0.2 percent by weight, 3,5-di-tert-butyl-4-hydroxyhydrocinnamic acid, neopentanetetrayl ester [CAS Registry No. 6683-19-8] has been added. The reduced viscosities or the inherent viscosities of the UHMW polyolefin are ascertained from relative viscosities obtained at 135 °C using an Ubbelohde No. 1 viscometer in accordance with the general procedures of ASTM D 4020-81, except that several dilute solutions of differing concentration are employed. The nominal molecular weight of UHMW polyethylene is empirically related to the intrinsic viscosity of the polymer in accordance with the following equation:

$$M = 5.37 \times 10^4 \, [\acute{\eta}]^{1.37}$$

wherein M is the nominal molecular weight and $[\acute{\eta}]$ is the intrinsic viscosity of the UHMW polyethylene expressed in deciliters/gram. Similarly, the nominal molecular weight of UHMW polypropylene is empirically related to the intrinsic viscosity of the polymer according to the following equation:

$$M = 8.88 \times 10^4 \, [\acute{\eta}]^{1.25}$$

wherein M is the nominal molecular weight and $[\acute{\eta}]$ is the intrinsic viscosity of the UHMW polypropylene expressed in deciliters/gram.

One or more other thermoplastic organic polymers also may be present in the matrix provided the desired properties of the microporous material are not affected in an adverse manner. The amount of the other thermoplastic polymers which may be present depends upon the nature of such polymers, the desired properties and the end-use application for the microporous material. Examples of thermoplastic organic polymers which optionally may be present can include poly(tetrafluoroethylene); copolymers of ethylene and propylene; functionalized polyolefins, such as vinyl acetate and/or vinyl alcohol modified polyethylene, or vinyl acetate and/or vinyl alcohol modified polypropylene, copolymers of ethylene and/or propylene modified with acrylic acid (e.g., POLYBOND 1001, 1002, and 1009 all available from Chemtura), and copolymers of ethylene and/or propylene modified with methacrylic acid, maleic anhydride modified polypropylenes, and maleic anhydride modified polyethylenes (e.g., FUSABOND M-613-05, MD-51 1 D, MB100D, and MB 439D all available from DuPont de Nemours and Company). If desired, all or a portion of the carboxyl groups of carboxyl-containing copolymers may be neutralized with sodium, zinc, or the like.

The microporous material of the present invention further comprises (b) a finely divided particulate filler component distributed throughout the matrix. The filler component is dispersed throughout the polymeric matrix component substantially homogeneously. The finely divided particulate filler comprises at least 10 weight percent, such as at least 15 weight percent, or at least 20 weight percent, or at least 25 weight percent, or at least 30 weight percent, of filler having a density ranging from 2.21 to 3.21 grams per cubic centimeter. Such finely divided particulates can include substantially water-insoluble non-siliceous filler particles. Examples of such non-siliceous filler particles can include particles of titanium oxide, iron oxide, copper oxide, zinc oxide, antimony oxide, zirconia, magnesium oxide, alumina, molybdenum disulfide, zinc sulfide, barium sulfate, strontium sulfate, calcium carbonate, magnesium carbonate, magnesium hydroxide, with the provise that the density of such materials ranges from 2.21 to 3.21 grams per cubic centimeter. The filler particles also may include finely divided substantially water-insoluble flame retardant filler particles such as particles of ethylenebis(tetra-bromophthalimide), octabromodiphenyl oxide, decabromodiphenyl oxide, and ethylenebisdibromonorbornane dicarboximide. Mixtures of any of the aforementioned particulate fillers can be employed.

Where desired, the finely divided, particulate filler component may comprise one or more additional inorganic filler materials, for example, siliceous and non-siliceous materials which may be, but are not necessarily, substantially water-insoluble.

As present in the microporous material, the finely divided particles may be in the form of ultimate particles, aggregates of ultimate particles, or a combination of both. For some applications, at least about 75 percent by weight of the particles used in preparing the microporous material have gross particle sizes in the range of from about 0.1 to about 40 micrometers as measured by light scattering using a LS 230 instrument (manufactured by Beckman Coulter, Inc.). It should be noted that specific ranges can vary from filler to filler. Moreover, it is expected that the sizes of filler agglomerates may be reduced during processing of the ingredients to prepare the microporous material. Accordingly, the distribution of gross particle sizes in the microporous material may be smaller than in the raw filler itself.

As previously mentioned, the filler component (b) further can comprise water-insoluble siliceous materials, metal oxides, and/or metal salts. Non-limiting examples of suitable siliceous particles can include particles of silica, mica, montmorillonite, including montmorillonite nanoclays such as those available from Southern Clay Products under the tradename CLOISITE®, kaolinite, asbestos, talc, diatomaceous earth, vermiculite, natural and synthetic zeolites, cement, calcium silicate, aluminum silicate, sodium aluminum silicate, aluminum polysilicate, alumina silica gels, and glass particles. Silica and the clays typically are used. Of the silicas, precipitated silica, silica gel, or fumed silica are most often used. Any of the previously mentioned siliceous particles may include treated (e.g., surface treated or chemically treated) siliceous particles.

Many different precipitated silicas may be employed in the present invention, but those obtained by precipitation from an aqueous solution of sodium silicate using a suitable acid such as sulfuric acid, hydrochloric acid, or carbon dioxide are used most often. Such precipitated silicas are themselves known and processes for producing them are described in detail in U.S. Pat. Nos. 2,657,149; 2,940,830; and 4,681,750. Typical precipitated silicas can include those having a BET (five-point) surface area ranging from 20 to 500 $m^2$/gram, such as from 50 to 250 $m^2$/gram, or from 100 to 200 $m^2$/gram.

In a particular embodiment of the present invention, the total combined weight percent of finely divided particulate filler (including the filler having a density ranging from 2.21 to 3.21 grams per cubic centimeter (g/cc), such as from 2.41 to 3.01 g/cc, or 2.51 to 2.81 g/cc, and any other fillers as described above) comprises 50 weight percent or less, or 40 weight percent or less, such as 35 weight percent or less, or 30 weight percent or less of particulate filler having a density ranging from 2.21 to 3.21, such as from 2.41 to 3.01 g/cc, or 2.51 to 2.81 g/cc. The density can range between any of the recited values inclusive of the recite values. In a particular embodiment of the present invention, the polyolefin matrix comprises 1 to 50 weight percent, such as 10 to 50 weight percent, or 10 to 30 weight percent of calcium carbonate.

In any of the previously described embodiments of the present invention, the finely divided particulate filler component (b) can further comprise silica, such as precipitated silica, which has a Friability Value of greater than or equal to 5 percent. The Friability Value represents the percent of particulates having a diameter of less than 1 micron after 120 minutes of sonication minus the percent of particles having a diameter of less than 1 micron prior to sonication. Friability Values are determined using the procedures described hereinbelow in the Examples.

Minor amounts, usually less than 10 percent by weight, of other materials used in processing such as lubricant, processing plasticizer, organic extraction liquid, surfactant, water, and the like, may also be present. Yet other materials introduced for particular purposes may optionally be present in the microporous material in small amounts, usually less than about 15 percent by weight. Examples of such materials can include antioxidants, ultraviolet light absorbers, reinforcing fibers such as chopped glass fiber strand, dyes, pigments, and the like. The balance of the microporous material, exclusive of filler and any coating, printing ink, or impregnant applied for one or more special purposes is essentially the-organic polymer.

As previously mentioned, the microporous material of the present invention comprises (c) a network of interconnecting pores communicating substantially throughout the microporous material. On a coating-free, printing ink-free, impregnant-free, and pre-bonding basis, pores constitute at least 5 percent by volume of the microporous material, such as at least 10 percent by volume, or at least 15 percent by volume of the microporous material. The pores can constitute from 10 to 80 percent by volume of the microporous material, such as from 10 to 75 percent by volume, or from 10 to 50 percent by volume of the microporous material. In the present invention, the pores constitute at least 35 percent by volume of the microporous material.

As used herein and in the claims, the porosity (also known as void volume) of the microporous material, expressed as percent by volume, is determined according to the equation:

$$\text{Porosity} = 100[1 - d_1/d_2]$$

where $d_1$ is the density of the sample which is determined from the sample weight and the sample volume as ascertained from measurements of the sample dimensions and $d_2$ is the density of the solid portion of the sample which is determined from the sample weight and the volume of the solid portion of the sample. The volume of the solid portion of the same is determined using a Quantachrome stereopycnometer (Quantachrome Corp.) in accordance with the accompanying operating manual.

The volume average diameter of the pores of the microporous material may be determined by mercury porosimetry using an Autopore III porosimeter (Micromeretics, Inc.) in accordance with the accompanying operating manual. Generally on a coating-free, printing ink-free, impregnant-free, and pre-bonding basis the volume average diameter of the pores is in the range of from about 0.02 to about 0.5 micrometer. For some applications, the volume average diameter of the pores can be in the range of from 0.03 to 0.4 micrometer, or from 0.04 to 0.2 micrometer.

In view of the possibility that some coating processes, printing processes, impregnation processes and/or bonding processes can result in filling at least some of the pores of the microporous material and since some of these processes irreversibly compress the microporous material, the parameters in respect of porosity, volume average diameter of the pores, and maximum pore diameter are determined for the microporous material prior to application of one or more of these processes. In the preparation of the microporous material of the present invention, filler particles, components of the polymeric matrix, and any processing additives such as plasticizers, etc., are mixed until a substantially uniform mixture is obtained. The weight ratio of filler to polymer employed in forming the mixture is essentially the same as that of the microporous material to be produced.

In one particular embodiment of the present invention, a certain percentage of the pores present in the microporous material are nano-pores. "Nano-pores" are defined herein as pores having diameters of approximately 100 nanometers or less. The percentage of nano-pores can be in the range of 50 to 80 percent, such as 55 to 75 percent, where percentages are based on the total volume of pores present in the microporous material.

As previously mentioned, the microporous substrate according to the present invention a density ranging from 0.5 to 0.9 g/cc, such as from 0.6 to 0.9 g/cc, or from 0.7 to 0.8 g/cc, or from 0.7 to 0.75 g/cc wherein density is determined as described hereinbelow in the Examples.

Also, the microporous material according to the present invention has an air flow rate of 1000 or more Gurley seconds, such as 1100 or more Gurley seconds, or 1200 or more Gurley seconds, or 1500 or more Gurley seconds, where air flow rate is determined as described hereinbelow in the Examples. In one particular embodiment, the microporous material had an air flow rate ranging from 1000 to 1800 Gurley seconds, such as from 1200 to 1800 Gurley seconds.

Further, the microporous material of the present invention exhibits MD stress at 1% strain of greater than or equal to 150 psi, such as greater than or equal to 200 psi, for example 200 to 400 psi. For purposes of the present invention, MD stress at 1 % strain (1 % modulus) is tested in accordance with ASTM D 882-02 modified by using a sample crosshead speed of 5.08 cm/minute until 0.508 cm of linear travel speed is completed, at which time the crosshead speed is accelerated to 50.8 cm/second, and where the sample width is approximately 1.2 cm and the sample gage length is 5.08 cm. All measurements are taken with the sample in the machine direction orientation, i.e. major axis oriented along the length of the sheet. The aforementioned ASTM test method is incorporated herein by reference.

Moreover, the microporous material of the present invention has a Sheffield (surface) smoothness (as measured by Gurley densometer, as described hereinafter in the Examples) in the range of from 0 to 100 Sheffield units, or from 0 to 50 Sheffield units, or from 0 to 40 Sheffield units (e.g., less than or equal to 40 Sheffield units, or less than or equal to 35 Sheffield units), or from 1 to 70 Sheffield units, or from 1 to 50 Sheffield units. As mentioned above, the present invention also is directed to an electronic device comprising: (I) a substrate comprising a microporous material such as any of those microporous materials according to the present invention described herein; and (II) a conductive ink appended to at least a portion of a surface of the substrate (I). For such applications, the microporous material typically (although not necessarily) is in the form of a sheet.

Certain characteristics of a substrate comprising any of the aforementioned microporous material of the present invention provide numerous advantages to the manufacture, performance and utility of electronic devices incorporating such substrates. These include but are not limited to the printability, flexibility, durability, strength, thermal stability, compatibility with a variety of printing inks, compatibility with a variety of lamination films, chemical resistance, compatibility with a variety of thermoplastic and thermoset resins, design fidelity and a variety of electrical properties.

The nano-porous structure of the microporous material of the present invention enhances ink printability in that solvents present in the conductive inks (e.g., organic solvents and/or water) tend to be conveyed into the matrix (e.g., via capillary action), while the ink solids remain at the surface. This promotes fast ink dry times.

In one embodiment, the microporous material of the present invention has a Dielectric Constant ranging from 1 to 100, such as from 1 to 50 or 1.1 to 10.0. Also the substrate of the present invention can have a Loss Tangent (measured at 100 MHz) ranging from 0 to 1.0, such as 0 to 0.1. Further the substrate of the present invention can have a Thermal Conductivity ($\lambda$(W/mK)) value ranging from 0 to 10, such as 0 to 5.0. In summary, the microporous material of the present invention generally exhibits a low dielectric constant, low loss tangent and thermal dissipation (thermal conductivity) properties.

A low dielectric constant denotes a material that will not readily build static or concentrate electrostatic lines of flux and through which radar energy will transmit to great depth and quickly. Low dielectric constant is advantageous for the design of many electronic components where stray electric discharge can interfere with performance. This notable performance property, also termed relative static permittivity, will allow signals to pass through the substrate with little to no attenuation which provides a plus in the operation of radio frequency proximity cards.

A low loss tangent value denotes how well the substrate allows a charge build to bleed off with very little resistance and heat generation. This low lost tangent complements the relatively low thermal conductivity of the microporous material of the present invention. Many printed electronic devices are and will be low power and low heat generators. It is also important to point out that the substrate's compatibility with a variety of films and adhesives will allow designers to engineer the degree of shielding effects desired in the final printed electronic device.

Additionally, the substrate surface smoothness, density, porosity and pore size distribution are parameters that should be considered for a printed electronics substrate, as these properties all affect the ability to print a conductive element.

Enhanced surface smoothness provides excellent circuitry line resolution through improved printability of the conductive inks onto the substrate surface.

Static dissipative properties of the microporous material are also noteworthy. Typically the microporous material of the present invention exhibits static dissipative characteristics at both 12% and 50% relative humidity. Additionally surface resistivity measurements taken in accordance with ASTM D-257 classify the substrate as exhibiting insulative properties at 12% relative humidity and dissipative at 50% relative humidity. Generally, the microporous material of the present invention has Static Decay values ranging from 0 to 20 seconds, and Surface Resistivity values ranging from 1 x $10^5$ to 1 x $10^{15}$. Further, the microporous material exhibits superior design fidelity as compared to glass. Design fidelity in this context is described as the ability of a substrate to consistently replicate the desired line dimensions in a printed electronic circuit.

The "compressibility" of the substrate, i.e., the ability of the substrate to be compressed or to yield under pressure, offers protection for the printed electronic elements on the surface of the substrate. At a compressive force of 1,000 psi taken at room temperature (70° to 80°F) a suitable substrate typically will deflect 10 to 20% of its original thickness. This property of yield under compression in combination with flexibility can provide printed circuitry and or imbedded devices protection from potentially damaging forces that could result from additional processing step(s), such as, conveying, printing, lamination, device insertion, or from "in-use" forces, such as, bending, stretching, compression, etc. In other words, the substrate has "compressibility" sufficient to permit the substrate to serve as type of "bubble wrap" for the circuitry printed thereon and/or any devices (e.g., an RFID chip) embedded therein. Typically the substrate comprised of the microporous material of the present invention has a range of compressibility (i.e., ability to protect the printed circuitry) of from 0 to 50,000 psi, such as from 0 to 20,000 psi.

In one particular embodiment of the present invention, the conductive ink (II) is applied to the substrate in the form of a line (e.g., as a line of conductive material forming an antenna, or circuitry on the substrate). The conductive ink can have a line width ranging from 1 to 50 micron(s), such as 3 to 30 microns, or from 5 to 20 microns.

Typically the ink is printed onto at least one surface to the substrate. Any of a variety of printing methods may be used to prepare the printed substrates of the present invention including, but not limited to, typographical printing where ink is placed on macroscopically raised areas of the printing plate, e.g., letter press, flexography, etc.; planographic printing, e.g., lithography, collotype printing, autotype printing, laser printing and xerography; stencil printing including screen printing; and ink jet printing.

Conductive ink selection, of course, would depend upon a variety of factors such as printing method type, and the ultimate end use of the printed substrate. Thus, it is contemplated that any of a wide variety of conductive inks and coatings as are well known in the art may be used.

Additionally, it is contemplated that, for some applications, it may be desirable to pretreat (for example, a corona treatment) and/or to apply a surface coating or primer onto at least a portion of the microporous material substrate surface(s) prior to application of the conductive ink. Such a coating or primer, may be desirable, for example, to provide enhanced line resolution or improved ink adhesion.

The present invention contemplates that conductive ink can be printed as an antenna on one side of the microporous substrate, and as one or more lines of circuitry on the opposing side of the microporous substrate. Also, it is contemplated that circuitry can be printed on both of the opposing sides of the microporous substrate. The circuitry can constitute a complete intergrated circuit. Likewise, conductive ink can be printed on one side of the microporous substrate, while non-conductive ink can be printed on the opposing surface.

Also, it is contemplated that the electronic device (i.e., the printed substrate) of the present invention may constitute one or more layers of a multilayer electronic device or component. For example, additional sheets or layers of the substrate material of the present invention may be attached (by any of a variety of suitable processes) onto either side of the printed substrate. In one embodiment, the printed circuitry or connector may be sandwiched between the substrate layer upon which the ink is printed and another sheet of the substrate over the printed ink. Likewise, the printed substrate of the present invention may further comprise one or more layers in a multilayer laminate structure, where one or more laminate films are attached (via lamination processes) to either or both sides of the printed substrate.

The present invention further is directed to a method for preparing microporous sheet material comprising a polyolefin matrix having finely divided particulate filler distributed throughout the matrix, and a network of interconnecting pores communicating throughout the microporous sheet material. The method comprises: (a) forming a mixture comprising a polyolefin matrix composition comprising (i) ultrahigh molecular weight polyolefin having a molecular weight of greater than 7 million grams per mole, such as any of those described above, (ii) 30 to 80 weight percent high density polyolefin such as any of those described above; and (iii) finely divided particulate filler comprising at least 10 weight percent of filler having a density ranging from 2.21 to 3.21 grams per cubic centimeter, such as 2.41 to 3.01 g/cc, or from 2.61 to 2.81 g/cc, and (iv) processing plasticizer composition such as any of those described herein below; **(b)** extruding the mixture to form a continuous sheet having a processing plasticizer composition content ranging from 45 to 55 weight percent based on weight of the continuous sheet; and **(c)** contacting the continuous sheet with an extraction fluid composition, such as any of those described herein below to extract the processing plasticizer composition from the continuous sheet to form the microporous sheet material. The microporous sheet material has a density ranging from 0.6 to 0.9 g/cc, a Sheffield smoothness of less than or equal to 40, and an air flow rate of 1000 or more Gurley seconds. Generally, the filler particles, the organic polymers (typically in the form of powders), the processing plasticizer composition, and minor amounts of auxiliaries such as lubricant, antioxidant, or any of the optional additives mentioned above, are mixed until a substantially uniform mixture is obtained. The mixture, optionally together with additional processing plasticizer composition, is introduced to the heated barrel of a screw extruder. Attached to the extruder is a sheeting die. A continuous sheet formed by the die is forwarded without drawing to a pair of heated calender rolls acting cooperatively to form continuous sheet of lesser thickness than the continuous sheet exiting from the die.

In the case of the microporous sheet material of the present invention, the continuous sheet at this point in the process includes an amount of processing plasticizer composition ranging from 40 to 65 weight percent, such as from 45 to 60 weight percent, or 45 to 55 weight percent, or 48 to 52 weight percent based on weight of the continuous sheet. It has been found that preparing the microporous sheet material of the present invention by this method (i.e, maintaining the level of processing plasticizer composition at an amount ranging between 40 to 65 weight percent) until sheet formation yields a final microporous sheet material which has properties desirable for printed electronic applications as are discussed herein.

The continuous sheet from the calender then passes to a first extraction zone where the processing plasticizer is substantially removed by extraction with an organic liquid which is a good solvent for the processing plasticizer, a poor solvent for the organic polymer, and more volatile than the processing plasticizer. Usually, but not necessarily, both the processing plasticizer and the organic extraction liquid are substantially immiscible with water. The continuous sheet then passes to a second extraction zone where the residual organic extraction liquid is substantially removed by steam and/or water. The continuous sheet is then passed through a forced air dryer for substantial removal of residual water and remaining residual organic extraction liquid. From the dryer the continuous sheet, which is microporous material can then be passed to a take-up roll. If desired processing steps can be conducted, for example, heating, further calendaring, and/or stretching.

The processing plasticizer is usually a processing oil such as paraffinic oil, naphthenic oil, or aromatic oil. Examples of suitable oils include but are not limited to Shellflex® 412 and Sheilflex® 371 oil (Shell Oil Co.) which are solvent refined and hydrotreated oils derived from naphthenic crude. Further non-limiting examples of suitable oils include ARCOprime® 400 oil (Atlantic Richfield Co.) and Kaydol® oil (Witco Corp.) which are white mineral oils. It is expected that other materials, including the phthalate ester plasticizers such as dibutyl phthalate, bis(2-ethylhexyl) phthalate, diisodecyl phthalate, dicyclohexyl phthalate, butyl benzyl phthalate, and ditridecyl phthalate will function satisfactorily as processing plasticizers.

There are many organic extraction liquids that can be used. Examples of suitable organic extraction liquids can include but are not limited to 1,1,2-trichloroethylene, perchloroethylene, 1,2-dichloroethane, 1,1,1-trichloroethane, 1,1,2-trichloroethane, methylene chloride, chloroform, 1,1,2-trichloro-1,2,2-trifluoroethane, isopropyl alcohol, diethyl ether, acetone, hexane, heptane, and toluene.

Due to its unique combination of physical properties, the microporous material of the present invention is especially suitable for use as one or more substrates in a variety of electronic devices employing printed electronic components.

Various non-limiting embodiments disclosed herein are illustrated in the following non-limited examples.

EXAMPLES

In Part 1 of the following examples, the formulations used to prepare the Example and Comparative Example mixes presented in Table 1 are described. Examples 1, 2 and Comparative Example 1 were prepared with the same silica. Examples 3, 4, 5 and Comparative Example 2 were prepared with the same silica that was different than the silica used for Examples 1, 2 and Comparative Example 1.

In Part 2, the methods used to extrude, calendar and extract the sheets prepared from the mixes of Part 1 are described. In Part 3, the methods used to determine the physical properties reported in Table 2 are described. In Part 4, the methods used to prepare the printed patterns and determine the electrical properties and characteristics of the printed patterns reported in Tables 3 and 4 are described.

PART 1 -MIX PREPARATION

The dry ingredients were weighed into a FM-130D Littleford plough blade mixer with one high intensity chopper style mixing blade in the order and amounts (grams (g)) specified in Table 1. The dry ingredients were premixed for 15 seconds using the plough blades only. The process oil was then pumped in via a double diaphragm pump through a spray nozzle at the top of the mixer, with only the plough blades running. The pumping time for the examples varied between 45-60 seconds. The high intensity chopper blade was turned on, along with the plough blades, and the mix was mixed for 30 seconds. The mixer was shut off and the internal sides of the mixer were scrapped down to insure all ingredients were evenly mixed. The mixer was turned back on with both high intensity chopper and plough blades turned on, and the mix was mixed for an additional 30 seconds. The mixer was turned off and the mix dumped into a storage container.

Table 1 - Example (Ex.) and Comparative Example (C.E.) Mixes

| Ingredients | Ex.1 | Ex.2 | C.E.1 | Ex.3 | Ex.4 | Ex.5 | C.E.2 |
|---|---|---|---|---|---|---|---|
| Silica (1a) | 1589 | 1930 | 2270 | 0 | 0 | 0 | 0 |
| Silica (2a) | 0 | 0 | 0 | 1930 | 1589 | 1589 | 2270 |
| $CaCO_3$ (b) | 681 | 341 | 0 | 341 | 681 | 681 | 0 |
| $TiO_2$ (c) | 91 | 91 | 91 | 91 | 91 | 91 | 91 |
| UHMWPE (1d) | 196 | 360 | 196 | 360 | 523 | 196 | 523 |
| UHMWPE (2d) | 196 | 360 | 196 | 360 | 523 | 196 | 523 |

(continued)

| Ingredients | Ex.1 | Ex.2 | C.E.1 | Ex.3 | Ex.4 | Ex.5 | C.E.2 |
|---|---|---|---|---|---|---|---|
| HDPE (e) | 916 | 589 | 916 | 589 | 262 | 916 | 262 |
| Antioxidant (f) | 15.3 | 15.3 | 15.3 | 15.3 | 15.3 | 15.3 | 15.3 |
| Lubricant (g) | 22.7 | 22.7 | 22.7 | 22.7 | 22.7 | 22.7 | 22.7 |
| Process oil (h) | 3178 | 3405 | 3950 | 3178 | 2951 | 2951 | 3707 |

(1 a) Silica Hi-Sil® WB37 precipitated silica was used and was obtained commercially from PPG Industries, Inc. This silica product was reported to be more friable than Silica Hi-Sil® SBG precipitated silica as reported below.
(2a) Silica Hi-Sil® SBG precipitated silica was used and was obtained commercially from PPG Industries, Inc.
(b) Camel-Wite® calcium carbonate was used and was obtained commercially from IMERYS.
(c) TIPURE® R-103 titanium dioxide, obtained commercially form E.I. du Pont de Nemours and Company.
(1d) GUR® 4130 Ultra High Molecular Weight Polyethylene (UHMWPE), obtained commercially from Ticona Corp and reported to have a molecular weight of about 6.8 million grams per mole.
(2d) GUR® 4150 Ultra High Molecular Weight Polyethylene (UHMWPE), obtained commercially from Ticona Corp and reported to have a molecular weight of about 9.2 million grams per mole.
(e) FINA® 1288 High Density Polyethylene (HDPE), obtained commercially from Total Petrochemicals.
(f) CYANOX® 1790 antioxidant, Cytec Industries, Inc.
(g) Calcium stearate lubricant, technical grade.
(h) TUFFLO® 6056 process oil, obtained commercially from PPC Lubricants.

The Friability Values of Silica Hi-Sil® WB37 and SBG precipitated silica samples were determined by the following procedure. Approximately 2 grams of silica was weighed into a 2 oz wide-mouth bottle containing a 1" stir bar, and 50 ml of water was then added. After stirring for one minute, the bottle was placed in an ice bath and a sonicator probe (tapered horn and flat tip) was inserted into the bottle so that it was approximated 4 cm below the surface of the liquid. The probe was connected to a Fisher Scientific Sonic Dismembrator, Model 550 having the sonication amplitude set to a power output of 120 watts.

The sonicator was run in the continuous mode in 60 second increments until 420 seconds was reached. An aliquot of the sample was withdrawn at 120 and 420 second intervals and the particle size was measured by light scattering, using a LS 230, a laser diffraction particle size instrument, (manufactured by Beckman Coulter, Inc.), capable of measuring particle diameters as small as 0.04 micrometer ($\mu$m). The particle size distribution data were volume based values.

Hi-Sil® WB37 precipitated silica was determined to be more friable than Hi-Sil® SBG precipitated silica since a larger percentage of particles were reduced to submicron size (<1 $\mu$m in diameter) after sonication at a given power wattage and time duration as shown below. The Friability Value represents the percent of particulates having a diameter of less than 1 micron after 120 seconds of sonication minus the percent of particles having a diameter of less than 1 micron prior to sonication.

| Silica | % of particles with diameter <1 $\mu$m at 0 sec. sonication | % of particles with diameter <1 $\mu$m at 120 sec. sonication | Friability Value |
|---|---|---|---|
| Hi-Sil® WB37 | 0.0% | 46.3% | 46.3% |
| Hi-Sil® SBG | 0.0% | 0.0% | 0.0% |

PART 2 - EXTRUSION, CALENDERING AND EXTRACTION

The mixes of the Examples and Comparative Examples were extruded and calendered into final sheet form using an extrusion system including a feeding, extrusion and calendering system described as follows. A gravimetric loss in weight feed system (K-tron model # K2MLT35D5) was used to feed each of the respective mixes into a 27mm twin screw extruder (model # was Leistritz Micro-27gg). The extruder barrel was comprised of eight temperature zones and a heated adaptor to the sheet die. The extrusion mixture feed port was located just prior to the first temperature zone. An atmospheric vent was located in the third temperature zone. A vacuum vent was located in the seventh temperature zone.

The mix was fed into the extruder at a rate of 90 grams/minute. Additional processing oil also was injected at the first temperature zone, as required, to achieve the desired total oil content in the extruded sheet. The oil contained in the extruded sheet (extrudate) being discharged from the extruder is referenced herein as the extrudate oil weight fraction which was based on the total weight of the sample was an arithmetic average of 0.548 for the Examples and Comparative Examples.

Extrudate from the barrel was discharged into a 38 centimeter wide sheet die having a 1.5 millimeter discharge opening. The extrusion melt temperature was 203-210°C.

The calendering process was accomplished using a three-roll vertical calender stack with one nip point and one cooling roll. Each of the rolls had a chrome surface. Roll dimensions were approximately 41 cm in length and 14 cm in diameter. The top roll temperature was maintained between 269°F to 285°F (132°C to 141°C). The middle roll temperature was maintained at a temperature from 279 °F to 280 °F (137°C to 138°C). The bottom roll was a cooling roll wherein the temperature was maintained between 50 °F to 70 °F (10°C to 21°C). The extrudate was calendered into sheet form and passed over the bottom water cooled roll and wound up.

A sample of sheet cut to a width of approximately 18 cm and an approximate length of 150 cm was rolled up along with a stainless steel wire mesh into a cylinder shape, placed in a canister and exposed to room temperature liquid 1,1,2-trichloroethylene for approximately 1 hour to extract oil from the sheet sample. The remaining oil content in the samples of the Examples and Comparative Examples was an arithmetic average of 6.9 wt.% based on the total weight of the sheet. The extracted sheet was air dried and subjected to test methods described hereinafter.

## PART 3 - TESTING AND RESULTS

Physical properties measured on the extracted and dried films and the results obtained are listed in Table 2.

Thickness was determined using an Ono Sokki thickness gauge EG-225. Two 4.5 x 5 inch (11.43 cm x 12.7 cm) specimens were cut from each sample and the thickness for each specimen was measured in twelve places (at least ¾ of an inch (1.91 cm) from any edge). The arithmetic average of the readings was recorded in mils to 2 decimal places and converted to microns.

The density (grams/cubic centimeters) of the Examples and Comparative Examples listed in Table 2 was determined by dividing the average sample weight by the average sample volume of a sample from each Example and Comparative Example. The average weight of a sample was determined by weighing two 11 cm X 13 cm samples to two decimal places on an analytical balance and then dividing by 2. The average volume for the same samples was determined by multiplying the length X the width X the thickness for each and then dividing by 2 to obtain an average sample volume. The average sample weight was then divided by the average sample volume to give the sample density (g/cc) for each Example and Comparative Example listed in Table 2.

The Porosity reported in Table 2 was determined using a Gurley densometer, model 4340, manufactured by GPI Gurley Precision Instruments of Troy, New York.

The Porosity reported was a measure of the rate of air flow through a sample or it's resistance to an air flow through the sample. The unit of measure is a "Gurley second" and represents the time in seconds to pass 100cc of air through a 1 inch square area using a pressure differential of 4.88 inches of water. Lower values equate to less air flow resistance (more air is allowed to pass freely). The measurements were completed using the procedure listed in the manual, MODEL 4340 Automatic Densometer and Smoothness Tester Instruction Manual. TAPPI method T 460 om-06-Air Resistance of Paper can also be referenced for the basic principles of the measurement.

Table 2 - Physical Properties

| Sample # | Sheet Thickness (μm) | Density (g/cc) | Porosity (Gurley seconds) |
|---|---|---|---|
| Ex. 1 | 230 | 0.730 | 2095 |
| Ex. 2 | 217 | 0.651 | 1785 |
| C.E. 1 | 243 | 0.566 | 1459 |
| Ex. 3 | 236 | 0.657 | 1648 |
| Ex. 4 | 230 | 0.675 | 1331 |
| Ex. 5 | 221 | 0.671 | 1315 |
| C.E. 2 | 226 | 0.595 | 1297 |

## PART 4 - ELECTRICAL TESTING

A pattern containing 2 sets of five lines with a targeted width of 100 microns and each having a 1/8 inch (0.3 cm) square contact tab at both ends of the lines were printed on samples of the Examples and Comparative Examples using a silver conductive ink, a Dimatix Materials Printer model DMP-2831 fitted with a Dimatix Materials Cartridge Printhead model DMC-11610 by FUJIFILM Dimatix, Santa Clara, CA. The pattern was printed on 2 different samples of each Example and Comparative Example resulting in 20 lines of conductive ink with contact tabs.

The results of electrical testing are reported in Table 3. The resistance measurements were made using a Extech Instrument MultiPro™ 530 True RMS set to measure resistance in ohms and fitted with contact lead types Extech TL805. Measurements were made by touching the contact leads to each end of the printed line/contact tab design, directly on the contact tab.

Current was measured using a Lambda Power Supply, Model LLS 5018, Output 0 - 18v @ 4.5A set to deliver 1volt. Measurements were made by touching the contact leads to each end of the printed line/contact tab design, directly on the contact tab.

Table 4 includes the measured line width, design fidelity and the number of lines with current from each Example and Comparative Example in Table 3. Line widths were measured from digital photomicrographs using a Wild M5A stereomicroscope fitted with a Spot digital camera system. Digital images were analyzed using Image J software available from Research Services Branch of the National Institute of Health at //rsbweb.nih.gov/ij/. The design fidelity was determined by dividing the targeted line width by the actual measured width.

Table 3. Electrical Properties.

| Line No. | Ex.1 Resistance, ohms | Ex.1 Current, milli-amps | Ex.2 Resistance, ohms | Ex.2 Current, milli-amps | C.E.1 Resistance, ohms | C.E.1 Current, milli-amps | Ex.3 Resistance, ohms | Ex.3 Current, milli-amps | Ex. 4 Resistance, ohms | Ex. 4 Current, milli-amps | Ex. 5 Resistance, ohms | Ex. 5 Current, milli- | C.E.2 Resistance, ohms | C.E.2 Current, milli- |
|---|---|---|---|---|---|---|---|---|---|---|---|---|---|---|
| 1 | 3.54 | 250 | *13. 87 K-ohms* | 0 | open | 0 | 715 | 10 | 12.33 | 0 | 24.58 | 330 | open | 0 |
| 2 | 5.31 | 0 | *27.90 K-ohms* | 0 | open | 0 | 213 | 0 | open | 0 | 25 | 270 | *870 K-ohms* | 0 |
| 3 | 2.82 | 345 | *9. 76 K-ohms* | 0 | open | 0 | *1.185 K-ohms* | 0 | 11.90 | 80 | open | 0 | open | 0 |
| 4 | 2.11 | 290 | *5.83 M-ohms* | 0 | *46.80 M-ohms* | 0 | *1.737 M-ohms* | 0 | 14.28 | 60 | open | 0 | 164.2 | 110 |
| 5 | 3.7 | 0 | 18.3 | 220 | open | 0 | 155.7 | 0 | open | 0 | open | 0 | open | 0 |
| 6 | 9.82 | 260 | open | 0 | open | 0 | 30.30 | 0 | 8.85 | 130 | *23.71 M-ohms* | 0 | 16.13 | 0 |
| 7 | 11.28 | 240 | open | 0 | open | 0 | *17.55 K-ohms* | 0 | open | 0 | *100. 6 K-ohms* | 0 | open | 0 |
| 8 | 3.19 | 370 | open | 0 | open | 0 | *18.53 K-ohms* | 0 | open | 0 | open | 0 | 13.8 | 130 |
| 9 | 2.44 | 380 | *17.66 M-ohms* | 0 | open | 0 | *51.40 K-ohms* | 0 | 19.02 | 40 | 97.80 | 0 | open | 0 |
| 10 | 1.98 | 410 | 12.41 | 200 | open | 0 | 233.70 | 0 | open | 0 | open | 0 | 7.45 | 0 |
| 11 | open | 0 | *17.71 K-ohms* | 0 | open | 0 | 5 | 0 | 47.75 | 40 | 3.76 | 300 | open | 0 |
| 12 | 6.09 | 290 | 20.25 | 220 | open | 0 | 3.82 | 240 | 11.93 | 60 | 3.71 | 290 | 16.82 | 0 |
| 13 | 2.58 | 370 | 16.03 | 210 | *34.48 M-ohms* | 0 | open (D)* | 0 | 12.15 | 0 | 6.30 | 190 | open | 0 |
| 14 | 2.32 | 380 | 27.18 | 200 | open | 0 | 12.70 | 30 | open | 0 | 6.69 | 240 | open | 0 |
| 15 | 5.13 | 430 | open | 0 | open | 0 | 19.70 | 30 | open | 0 | 251.7 | 0 | 27.01 | 0 |
| 16 | open | 0 | open | 0 | open | 0 | 4.61 | 190 | 116.8 | 0 | 4.78 | 280 | open | 0 |
| 17 | 2.65 | 360 | 14.65 | 220 | open | 0 | 60 | 0 | 16.61 | 200 | open (D) | 0 | open | 0 |
| 18 | 2.28 | 450 | 14.41 | 210 | open | 0 | 5.25 (D)* | 140 | 7.42 | 250 | 3.83 | 230 | open | 0 |
| 19 | 1.98 | 400 | 12.62 | 210 | open | 0 | 11.07 | 50 | 11.72 | 0 | 10.57 | 190 | open | 0 |
| 20 | 1.82 | 440 | 5.56 | 290 | open | 0 | 13.12 | 50 | open | 0 | 78.1 | 0 | 41 | 0 |

(D)* indicates that the printed line was determined to be damaged upon visual inspection.

Table 4. Measured Line Width, Design Fidelity and Number of Lines with Current

| Samp le No. | Measured Line Width (microns) | Design Fidelity (ratio of target/actual) | Number of Lines out of 20 with Current |
|---|---|---|---|
| Ex. 1 | 173 | 0.58 | 16 |
| Ex. 2 | 157 | 0.64 | 9 |
| C.E.1 | 142 | 0.70 | 0 |
| Ex. 3 | 205 | 0.49 | 8 |
| Ex. 4 | 142 | 0.70 | 8 |
| Ex. 5 | 130 | 0.77 | 9 |
| C.E. 2 | 234 | 0.43 | 2 |

**Claims**

1.  A microporous material comprising:

    (a) a polyolefin matrix comprising ultrahigh molecular weight polyolefin having a molecular weight of greater than 7 million grams per mole, and 30 to 80 weight percent high density polyolefin,
    (b) finely divided particulate filler distributed throughout the matrix, said particulate filler comprising at least 10 weight percent of filler having a density ranging from 2.21 to 3.21 grams per cubic centimeter, and
    (c) at least 35 percent by volume of a network of interconnecting pores communicating throughout the microporous material,
    wherein the microporous material has a density ranging from 0.6 to 0.9 g/cc, a Sheffield smoothness of less than or equal to 40, and an air flow rate of 1000 or more Gurley seconds.

2.  The microporous material of claim 1, wherein the polyolefin matrix comprises 50 to 80 weight percent high density polyethylene.

3.  The microporous material of claim 1, wherein the polyolefin matrix further comprises ultrahigh molecular weight polyethylene having a molecular weight of greater than 8 million grams per mole.

4.  The microporous material of claim 1, wherein the finely divided particulate filler comprises 10 to 30 weight percent calcium carbonate.

5.  The microporous material of claim 1 wherein the finely divided particulate filler further comprises silica having a Friability Value of greater than or equal to 5 percent.

6.  The microporous material of claim 1, wherein the microporous material has

    - a density ranging from 0.70 to 0.9 g/cc, and/or
    - a Sheffield smoothness of less than or equal to 35, and/or
    - an air flow rate of 1200 or more Gurley seconds.

7.  The microporous material of claim 1, having a Dielectric Constant ranging from 1 to 50.

8.  The microporous material of claim 1, having a Loss Tangent measured at 100 MHz ranging from 0 to 0.1.

9.  The microporous material of claim 1 having a Thermal Conductivity value ($\lambda$(W/mK)) ranging from 0 to 5.0.

10. An electronic device comprising:

    (I) a substrate comprising a microporous material according to any of claims 1-6; and
    (II) a conductive ink appended to at least a portion of a surface of the substrate (I).

**11.** The electronic device of claim 10 wherein the conductive ink (II) is appended to a surface of the microporous substrate by printing.

**12.** The electronic device of claim 11, wherein the conductive ink (II) is printed onto a surface of the microporous substrate in a line having a width of at least 5 microns.

**13.** A method for preparing microporous sheet material comprising a polyolefin matrix having finely divided particulate filler distributed throughout the matrix, and a network of interconnecting pores communicating throughout the microporous sheet material, the method comprising:

(a) forming a mixture comprising
a polyolefin matrix composition comprising:

(i) ultrahigh molecular weight polyolefin having a molecular weight of greater than 7 million grams per mole;
(ii) 30 to 80 weight percent high density polyolefin; and
(iii) finely divided particulate filler comprising at least 10 weight percent of filler having a density ranging from 2.21 to 3.21 grams per cubic centimeter and
(iv) processing plasticizer composition;

(b) extruding the mixture to form a continuous sheet having a processing plasticizer composition content ranging from 45 to 55 weight percent based on weight of the continuous sheet; and
(c) contacting the continuous sheet with an extraction fluid composition to extract the processing plasticizer composition from the continuous sheet to form the microporous sheet material,
wherein the microporous sheet material has a density ranging from 0.6 to 0.9 g/cc, a Sheffield smoothness of less than or equal to 40, and an air flow rate of 1000 or more Gurley seconds.

**14.** The process of claim 13, wherein the continuous sheet of (b) has a processing plasticizer composition content ranging from 48 to 52 weight percent based on weight of the continuous sheet.

**Patentansprüche**

**1.** Mikroporöses Material enthaltend:

(a) eine Polyolefinmatrix, die ein ultrahochmolekulares Polyolefin mit einem Molekulargewicht von mehr als 7 Millionen g/mol und 30 bis 80 Gew.-% eines Polyolefins hoher Dichte enthält,
(b) einen fein verteilten teilchenförmigen Füllstoff, der in der Matrix verteilt ist, wobei dieser teilchenförmige Füllstoff wenigstens 10 Gew.-% eines Füllstoffs mit einer Dichte im Bereich von 2,21 bis 3,21 g/cm$^3$ enthält, und
(c) wenigstens 35 Vol.-% eines Netzwerks von miteinander verbundenen Poren, die durch das mikroporöse Material kommunizieren,
wobei das mikroporöse Material eine Dichte im Bereich von 0,6 bis 0,9 g/cm$^3$, eine Sheffield-Glätte von weniger als oder gleich 40 und eine Luftfließgeschwindigkeit von 1000 oder mehr Gurley-Sekunden aufweist.

**2.** Mikroporöses Material nach Anspruch 1, wobei die Polyolefinmatrix 50 bis 80 Gew.-% Polyethylen hoher Dichte enthält.

**3.** Mikroporöses Material nach Anspruch 1, wobei die Polyoletinmatrix weiterhin ein ultrahochmolekulares Polyethylen mit einem Molekulargewicht von mehr als 8 Millionen g/mol enthält.

**4.** Mikroporöses Material nach Anspruch 1, wobei der fein verteilte teilchenförmige Füllstoff 10 bis 30 Gew.-% Calciumcarbonat enthält.

**5.** Mikroporöses Material nach Anspruch 1, wobei der fein verteilte teilchenförmige Füllstoff zusätzlich Siliciumdioxid mit einem Brüchigkeitswert von größer als oder gleich 5 % enthält.

**6.** Mikroporöses Material nach Anspruch 1, wobei das mikroporöse Material

- eine Dichte im Bereich von 0,70 bis 0,9 g/cm$^3$ und/oder

- eine Sheffield-Glätte von weniger als oder gleich 35 und/der
- eine Luftfließgeschwindigkeit von 1200 oder mehr Gurley-Sekunden aufweist.

**7.** Mikroporöses Material nach Anspruch 1 mit einer Dielektrizitätskonstante im Bereich von 1 bis 50.

**8.** Mikroporöses Material nach Anspruch 1 mit einem Verlustfaktor gemessen bei 100 MHz im Bereich von 0 bis 0,1.

**9.** Mikroporöses Material nach Anspruch 1 mit einem Wert der thermischen Leitfähigkeit ($\lambda$(W/mK)) im Bereich von 0 bis 5,0.

**10.** Elektronische Vorrichtung umfassend:

(I) ein Substrat mit einem miktoporösen Material gemäß einem der Ansprüche 1-6 und
(II) eine leitfähige Tinte, die mit wenigstens einem Teil der Oberfläche des Substrats (I) in Verbindung steht.

**11.** Elektronische Vorrichtung nach Anspruch 10, wobei die leitfähige Tinte (II) auf eine Oberfläche des mikroporösen Substrats durch Aufdrucken aufgebracht ist.

**12.** Elektronische Vorrichtung nach Anspruch 11, wobei die leitfähige Tinte (II) auf eine Oberfläche des mikroporösen Substrats in einer Linie mit einer Breite von wenigstens 5 $\mu$m aufgedruckt ist.

**13.** Verfahren zur Herstellung eines mikroporösen Blattmaterials enthaltend eine Polyolefinmatrix mit einem fein verteilten teilchenförmigen Füllstoff, der innerhalb der Matrix verteilt ist, und ein Netzwerk von miteinander verbundenen Poren, die innerhalb des mikroporösen Blattmaterials kommunizieren, wobei das Verfahren umfasst:

(a) Ausbilden einer Mischung enthaltend eine Polyolefinmatrixzusammensetzung enthaltend:

(i) ein ultrahochmolekulares Polyolefin mit einem Molekulargewicht von mehr als 7 Millionen g/mol,
(ii) 30 bis 80 Gew.-% eines Polyolefins hoher Dichte und
(iii) einen fein verteilten teilchsnförmigen Füllstoff enthaltend wenigstens 10 Gew.-% eines Füllstoffs mit einer Dichte im Bereich von 2,21 bis 3,21 g/cm$^3$ und
(iv) eine Verarbeitungsweichmacherzusammensetzung,

(b) Extrudieren der Mischung, um ein kontinuierliches Blatt mit einem Gehalt an Verarbeitungsweichmacherzusammensetzung im Bereich von 45 bis 55 Gew.-%, bezogen auf das Gewicht des kontinuierlichen Blatts zu bilden, und
(c) In-Kontakt-Bringen des kontinuierlichen Blatts mit einer Extraktionsflüssigkeitszusammensetzung, um die Verarbeitungsweichmacherzusammensetzung aus dem kontinuierlichen Blatt zu extrahieren, um das mikroporöse Blattmaterial zu bilden,
wobei das mikroporöse Blattmaterial eine Dichte im Bereich von 0,6 bis 0,9 g/cm$^3$, eine Sheffield-Glätte von weniger als oder gleich 40 und eine Luftfließgeschwindigkeit von 1000 oder mehr Gurley-Sekunden aufweist.

**14.** Verfahren nach Anspruch 13, wobei das kontinuierliche Blatt aus (b) einen Gehalt an Verarbeitungsweichmacherzusammensetzung im Bereich von 48 bis 52 Gew.-%, bezogen auf das Gewicht des kontinuierlichen Blatts, aufweist.

**Revendications**

**1.** Matériau microporeux renfermant :

a) une matrice en polyoléfine renfermant une polyoléfine de poids moléculaire ultra élevé ayant un poids moléculaire supérieur à 7 millions de grammes par mole et 30 à 80 % en poids de polyoléfine haute densité.
b) une charge particulaire finement divisée distribuée au travers de la matrice, cette charge particulaire renfermant au moins 10 % en poids de charge ayant une densité située dans la plage de 2.21 à 3.21 g/cm$^3$, et
c) au moins 35 % en volume d'un réseau de pores d'interconnexion communiquant au travers du matériau microporeux.
le matériau microporeux ayant une densité située dans la plage de 0,6 à 0,9 g/ cm$^3$, un lissé Sheffield inférieure ou égale à 40 et un débit d'au moins 1000 Gurley secondes.

**2.** Matériau microporeux conforme à la revendication 1, dans lequel la matrice de polyoléfine renferme 50 à 80 % en poids de polyéthylène haute densité.

**3.** Matériau microporeux conforme à la revendication 1, dans lequel la matrice en polyoléfine renferme en outre du polyéthylène ayant un poids moléculaire ultra élevé ayant un poids moléculaire supérieur à 8 millions de grammes par mole.

**4.** Matériau microporeux conforme à la revendication 1, dans lequel la charge particulaire finement divisée renferme 10 à 30 % en poids de carbonate de calcium.

**5.** Matériau microporeux conforme à la revendication 1, dans lequel la charge particulaire finement divisée renferme en outre de la silice ayant une valeur de friabilité supérieure ou égale à 5 %.

**6.** Matériau microporeux conforme à la revendication 1, ayant :

- une densité située dans la plage de 0,70 à 0,9 g/ cm$^3$, et/ou
- un lissé Sheffield inférieure ou égale à 35, et/ou
- une perméabilité d'au moins 1200 Gurley secondes.

**7.** Matériau microporeux conforme à la revendication 1, ayant une constante diélectrique située dans la plage de 1 à 50.

**8.** Matériau microporeux conforme à la revendication 1, ayant une tangente de perte mesurée à 100 MHz située dans la plage de 0 à 0,1.

**9.** Matériau microporeux conforme à la revendication 1, ayant une valeur de conductivité thermique ($\lambda$(W/mK)) située dans la plage de 0 à 5.0.

**10.** Dispositif électronique comprenant :

(I) un substrat renfermant un matériau microporeux conforme à l'une quelconque des revendications 1 à 6, et
(II) une encre conductrice appliquée sur au moins une partie de la surface du substrat (I).

**11.** Dispositif électronique conforme à la revendication 10. dans lequel l'encre conductrice (II) est appliqué sur une surface du substrat microporeux par impression.

**12.** Dispositif électronique conforme à la revendication 11, dans lequel l'encre conductrice (II) est imprimée sur une surface du substrat microporeux selon une ligne ayant une largeur d'au moins 5 microns.

**13.** Procédé d'obtention d'un matériau sous forme de feuille microporeux renfermant une matrice en polyoléfine ayant une charge particulaire finement divisée distribuée au travers de cette matrice et un réseau de pores d'interconnexion communiquant au travers du matériau en feuille microporeux, ce procédé comprenant les étapes consistant à :

a) former un mélange renfermant :

- une composition de matrice en polyoléfine renfermant :

(i) une polyoléfine de poids moléculaire ultra élevé ayant un poids moléculaire supérieur à 7 millions de grammes par mole,
(ii) 30 à 80 % en poids de polyoléfine haute densité, et
(iii) une charge de particulaire finement divisée renfermant au moins 10 % en poids de charge ayant une densité située dans la plage de 2,21 à 3.21 g/cm3, et
(iv) une composition de plastifiant de traitement,

b) extruder le mélange pour former une feuille continue ayant une teneur en composition de plastifiant de traitement située dans la plage de 45 à 55 % en poids par rapport au poids de la feuille continue, et
c) mettre en contact la feuille continue avec une composition de fluide d'extraction pour extraire la composition de plastifiant de traitement de la feuille continue de façon à former le matériau en feuille microporeux,
le matériau en feuille microporeux ayant une densité située dans la plage de 0,6 à 0,9 g/ cm$^3$, un lissé Sheffield

inférieure ou égale à 40 et une perméabilité d'au moins 1000 Gurley secondes.

14. Procédé conforme à la revendication 13, selon lequel le feuille continue obtenue à l'issue de l'étape b) a une teneur en composition de plastifient de traitement située dans la plage de 48 à 52 % en poids par rapport au poids de la feuille continue.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2657149 A
- US 2940830 A

- US 4681750 A